(19) Europäisches Patentamt
European Patent Office
Office européen des brevets

(11) **EP 4 079 522 B1**

(12) **EUROPEAN PATENT SPECIFICATION**

(45) Date of publication and mention
of the grant of the patent:
**29.11.2023 Bulletin 2023/48**

(21) Application number: **22169645.3**

(22) Date of filing: **25.04.2022**

(51) International Patent Classification (IPC):
***B32B 37/10*** *(2006.01)*   ***B32B 37/12*** *(2006.01)*
***E04C 2/04*** *(2006.01)*

(52) Cooperative Patent Classification (CPC):
**B32B 37/1284; B32B 37/10; E04C 2/041;**
B32B 2309/72; B32B 2419/02; E04C 2002/007

(54) **GLUING BRICK SLIPS**

KLEBEN VON ZIEGELSTEINKEILEN

COLLAGE DE PLAQUETTES DE PAREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2021 BE 202105320**

(43) Date of publication of application:
**26.10.2022 Bulletin 2022/43**

(73) Proprietor: **Vandersanden Steenfabrieken N.V.
3740 Bilzen (BE)**

(72) Inventors:
 • **Leën, Maarten
  3740 Bilzen (BE)**
 • **Wauters, Maarten
  3740 Bilzen (BE)**
 • **Knapen, Simon
  3740 Bilzen (BE)**
 • **Beyens, Dries
  3740 Bilzen (BE)**

(74) Representative: **Callewaert, Raf et al
Bureau Callewaert
Brusselsesteenweg 108
3090 Overijse (BE)**

(56) References cited:
**GB-A- 2 516 054     JP-A- 2000 328 711**

**Description**

The invention relates to a method and device for machine gluing stone strips, such as brick strips, to a substrate, wherein glue is applied to the substrate and/or the stone strips and then, after a delay time, the stone strips are each pressed with a specific contact pressure against the substrate during a contact time, with the glue between the stone strips and the substrate.

Brick strips are relatively thin bricks that can be obtained, for example, by sawing them from regular solid bricks. For example, two strips can be obtained from a brick by sawing off the brick's stretcher faces at a thickness of, for example, 2 cm parallel to these stretcher faces. In this way, a stone strip is obtained with a visible side consisting of the stretcher and a sawing plane that is more or less parallel thereto. Alternatively, thin bricks can be fired as stone strips. Furthermore, stone strips can also be obtained in another manner known as such or they can consist of, for example, ceramic tiles, natural stone or composite stone.

The substrate may consist, for example, of a prefab wall or facade panel, preferably thermally and/or acoustically insulating.

According to the present state of the art, stone strips are attached to a substrate by applying glue to the substrate or the stone strips as is, for example, also described in patent publications GB2516054A and JP2000328711A. Subsequently, the strips are pressed against the substrate with a contact pressure, with the glue being situated between the strips and the substrate. Sufficient contact pressure must be exerted for a sufficient period of time for a quality fastening of the stone strips. During the machine manufacture of stone strip panels, said contact pressure and contact time are constant, and the stone strips are consecutively adjacent to each other glued to the substrate.

The stone strips are glued to the substrate in a specific desired pattern. In doing so, possible variations in the dimensions of the strips must be taken into account. Consequently, a minimum width of the joint between the stone strips must always be taken into account.

Stone strips which look like hand-moulded bricks can, for example, typically show differences and/or deviations in dimensions. This is the case, for example, when they are sawn from regular hand-moulded bricks. The thickness, width and length of the strips may vary.

Due to the possible variations and deviations in the dimensions of the strips, it is not always possible to lay strips in a pattern without joints or with minimal joints. The thickness of the joints between the strips will partly be determined by the varying dimensions of the strips. To avoid certain joints being too thick or too narrow, the dimensions of each of the stone strips must therefore be taken into account.

Furthermore, when machine manufacturing stone strip panels, it is important to bond the stone strips with the glue sufficiently firmly to the substrate at the highest possible speed. The substrate may possibly have different surfaces, borders and/or edges to be coated. Complex bonding patterns are therefore difficult to achieve. Moreover, the quality of the adhesion cannot always be guaranteed.

The invention aims to remedy these disadvantages by proposing a device and method in which stone strips are efficiently glued to the substrate and in which, in addition to the quality of the gluing, the speed is also optimized, even with complex substrates and/or complex bonding patterns.

To this end, the invention proposes a method in which the contact pressure is determined depending on the delay time between the glue being applied and the stone strip being pressed, as put forward in the appended claims.

Practically, the applied glue has a certain temperature and the contact pressure is determined as a function of the delay time and, preferably, also the temperature of the glue.

Advantageously, the stone strips are applied to the substrate in a predetermined pattern.

Thus, each stone strip may be applied at a location in the pattern, depending on predetermined properties of said stone strip. These predetermined properties of the stone strip may include thickness, width, length, colour and/or texture, among other things.

In a very advantageous manner, the contact pressure is variable and, preferably, the contact pressure with which the stone strip is pressed is determined separately for each stone strip.

According to a selection possibility of the invention, the contact time is selected longer than 0.005 seconds, preferably longer than 0.01 seconds, and less than 1 second, preferably less than 0.2 seconds, in particular, less than 0.1 seconds.

In a most advantageous manner, the contact pressure per surface measure amounts to maximally of 12.5 kN/m2 to 20 kN/m2, preferably 13.5 kN/m2 to 17.5 kN/m2, and in particular 15 kN/m2, and the contact pressure per surface measure has a minimum determined by the equation

$$P_{min} \, [N/m^2] = (A' \times t_{open} \, [min] \times T_{glue} \, [°C]) + C'$$

where

$P_{min}$ is the minimum contact pressure per surface measure in Newtons per square metre (N/m$^2$),

A' is a constant,

$t_{open}$ is the delay time in minutes (min),

$T_{glue}$ is the glue temperature in °C,

C' is a constant in Newtons per square metre (N/m$^2$).

In a specific embodiment, the constant A' is 1 to 10, preferably 3 to 7, in particular 5.6.

In a possible embodiment, the constant C' is 500 N/m$^2$ to 7500 N/m$^2$, preferably 3000 N/m$^2$ to 7000 N/m$^2$, and in particular 5000 N/m$^2$.

In a further possible embodiment, the constant C' depends on the viscosity of the glue and is determined by the equation C' = 5.10$^{-3}$ × η with η being the viscosity of the glue in mPa.s.

Advantageously, the contact pressure is selected smaller than $P_{min}$ + 5000 N/m$^2$, preferably smaller than $P_{min}$ + 1000 N/m$^2$, in particular smaller than $P_{min}$ + 500 N/m$^2$.

In a special manner, while the stone strip is being pressed, this stone strip is moved parallel to the substrate. Thus, while the stone strip is being pressed, said stone strip may be moved towards said substrate at an angle relative to the substrate. After and/or during the pressing of the stone strip, this stone strip may also be moved back and forth, parallel to the substrate.

For a good quality adhesion, preferably, after pressing, at least 50%, preferably at least 60%, in particular at least 70% of the surface of the stone strip between the stone strip and the substrate is covered with glue.

Possibly, in one embodiment, the glue temperature is 5°C to 50°C, preferably 10°C to 40°C, in particular 15°C to 35°C.

The amount of glue applied to the surface of the substrate and/or the stone strip may in one embodiment be 100 g/m$^2$ to 1500 g/m$^2$, preferably 300 g/m$^2$ to 1200 g/m$^2$, in particular 600 g/m$^2$ to 1000 g/m$^2$.

The delay time may be up to 30 minutes in one embodiment, preferably up to 45 minutes, in particular up to 60 minutes.

A possible glue is a two-component epoxy glue, where the different components of the glue may have a density of 1.2 g/cm$^3$ to 1.7 g/cm$^3$ at an ambient temperature of 20°C.

The substrate may consist of, for example, concrete, fibre cement board or EPS insulation material, possibly with a fire-resistant coating.

In a very special manner, coordinates are determined for the stone strip in relation to the substrate and a value of at least one parameter is measured which determines the quality of gluing of the stone strips. Furthermore, the value of this parameter and/or the quality is stored together with the coordinates of the stone strip. The parameter may be the delay time, the contact pressure, the glue temperature and/or the contact time, and the coordinates may be determined in relation to at least one reference point on the substrate.

The value of this parameter may, for example, be compared with at least one reference value and/or criterion based on this reference value, whereby an alarm signal may be generated when this value deviates from said reference value and/or criterion. In case of a deviating value, the quality will, for example, be insufficient. If the criterion is met, the quality will, for example, be sufficient.

The invention also relates to a device for gluing stone strips to a substrate and for manufacturing a panel with a stone strip finish, as is also claimed in the appended claims. This device is equipped with a glue unit for applying glue to the substrate and/or the stone strip. This device is also provided with a supply unit for applying the stone strips to the substrate with the glue between the stone strip and the substrate. This device is also equipped with a pressure unit for subsequently pressing the brick strips against the substrate with a specific contact pressure, with the glue between the stone strip and the substrate. The device is further equipped with a control unit to determine for each stone strip the specific contact pressure as a function of the delay time between applying the glue and pressing the brick strips.

Preferably, the device is also provided with a recording unit and at least one sensor for measuring at least one parameter which determines the quality of gluing of the stone strip. The recording unit is thereby preferably set to store the value of said parameter and/or the quality, together with coordinates of the stone strip on the substrate.

Other particularities and advantages of the invention will become clear from the following description of practical embodiments of the method and the device according to the invention; this description is given by way of example only and does not limit the scope of the protection claimed.

Figure 1 is a graphical representation of the contact pressure as a function of the delay time and the glue temperature according to an embodiment of the invention.

Figure 2 is a graphical representation of the contact pressure per surface measure as a function of the delay time and the glue temperature according to an embodiment of the invention.

The invention generally relates to a method and device for machine gluing stone strips to a substrate. Glue is thereby applied to the substrate and/or the stone strips, after which the stone strips are applied to the substrate with the glue between the stone strips and the substrate. The stone strips are pressed against the substrate, causing the glue to spread between the stone strips and the substrate. The method takes into account a delay between the time of application of the glue and the time at which the stone strips are pressed against the substrate. The stone strips may consist, for example, of bricks, ceramic tiles, composite stone or natural stone.

In particular, the invention relates to the manufacture of prefabricated panels and/or facade panels with a stone strip finish. These panels may consist of insulation boards, laminated wood, concrete, fibre cement board, combinations thereof or other panels that can be used for building or cladding facades. Preferably, these panels are self-supporting. Insulation panels consisting of, for example, expanded polystyrene (EPS) or polyurethane (PU), either with or without a cement coating, are known as such for such applications. The method allows for the efficient manufacture of customised prefabricated walls and/or prefabricated facades with a stone strip finish.

According to the invention, the stone strips are glued to the substrate in a desired bonding pattern or masonry bond. Thus, the strips cannot only be glued in all known masonry bonds, but it is also possible to obtain patterns that are not possible in traditional masonry.

According to the invention, the order in which the stone strips are applied is not necessarily limited to these stone strips being laid consecutively. For instance, stone strips may be laid in an arbitrary pattern or they may be laid in an alternative order, taking into account varying dimensions, colour and/or texture of the stone strips.

According to the invention, the contact time during which the stone strips are pressed against the substrate is preferably kept as short as possible in order to maximize the production speed. In addition, the bonding of the stone strips should always be sufficiently strong. This bonding largely depends on the size of the contact surface between the glue and the stone strip or between the glue and the substrate. This is mainly influenced by the contact pressure, the delay time and also the glue temperature. With a longer delay time, the glue will be exposed longer and/or harden more. At a higher glue temperature, the glue will dry and/or harden faster.

In order to obtain a sufficiently strong bond, a minimum contact pressure must be exerted on the stone strips, so that the glue spreads between the stone strip and the substrate. According to the invention, for a specific contact time, which is preferably as short as possible, the minimum contact pressure is determined depending on the delay time and/or the glue temperature.

The contact time may, for example, be selected to be less than 1 second, preferably less than 0.2 seconds, in particular less than 0.1 seconds. Furthermore, this contact time is preferably at least 0.005 seconds, in particular at least 0.01 seconds, more particularly at least 0.1 seconds.

When the delay time for the stone strips varies depending on the bonding pattern, the contact pressure for each stone strip may also be varied according to the invention in order to obtain a sufficiently firm adhesion within a selected short contact time.

The application of the stone strips is therefore not necessarily synchronous with the application of the glue on the substrate and/or the stone strips. The bonding pattern also depends, for example, on the shape of the stone strips and the design of the wall that forms the substrate. The wall may contain, for example, window and/or door openings. Corner strips may also be provided on the ends of the wall.

Furthermore, the quality of gluing of the stone strips may be monitored. For this purpose, it is possible to measure the value of at least one parameter that determines this quality. The parameter may be, for example, the delay time, the contact pressure, the glue temperature and/or the contact time. The value of this parameter may, for example, be compared to at least one reference value and/or a criterion based on this reference value. A criterion may be, for example, a minimum contact pressure and/or a maximum delay time. If the criterion is met, the quality will, for example, be sufficient. If the criterion is not met in case of a deviating value, the quality will, for example, be insufficient and an alarm signal can be generated.

According to a first embodiment of the method of the invention for machine gluing the stone strips to the substrate, the glue is applied to the substrate. In this embodiment, the substrate consists, for example, of an ESP insulation board which may be provided on a laminated wooden panel. The glue is applied to the insulation board in glue lines. According to this embodiment, the glue lines are applied parallel to each other, at a distance from each other of, for example, preferably 20 mm to 25 mm, and in particular about 23 mm.

The glue lines in this embodiment form continuous strips of glue. Alternatively, the glue lines may be formed of, for instance, successive interrupted strips of glue or a succession of discrete glue droplets.

After the glue lines have been applied, the stone strips are applied to them. The stone strips in this embodiment can be, for example, brick strips obtained from regular solid bricks having, for example, a size of 200 mm by 100 mm by 50 mm. For this purpose, approximately 2 cm is sawn off from the stretcher face of the brick so as to obtain a strip of 200 mm by 50 mm by 20 mm. The surface area of the sawing plane is 100 cm$^2$ in this case. Other formats of bricks and stone strips are also possible, of course. The sawing plane is then, preferably, approximately parallel to the visible plane of the strip formed by the stretcher. In order to obtain more relief in the finished panel, the sawing plane can also be made oblique to the plane of the stretcher, or use can be made of stone strips with different thicknesses.

The stone strips are preferably placed crosswise to the glue lines. The sawing plane thereby makes contact with the glue. Next, the stone strip is pressed against the substrate with a certain contact pressure. Alternatively, at least a part of the stone strips may also be placed, for example, diagonally to the glue lines and/or parallel to these glue lines.

The sawing plane is, preferably, always more or less parallel to the substrate. The contact pressure is exerted on the stone strips, more or less perpendicular to the substrate. Preferably, the contact pressure is also more or less perpendicular to the stretcher and/or sawing plane of the stone strip and possibly depends, for instance, on whether or not level differences are desired between the stretches of the applied stone strips.

By pressing the strip, the glue will spread from the glue lines over the surface of the sawing plane. According to this embodiment, at least 50% and preferably 70% to 80% of the surface of the sawing plane is thus covered with glue.

For a good adhesion of the stone strip, a sufficiently large contact area must be obtained between the glue and the substrate and between the glue and the stone strip. According to this embodiment, the surface of this contact area amounts to at least 50% of the surface of the stone strip that faces the substrate. Preferably, this is at least 70%. The spread of the glue can be varied by, for example, adjusting the contact pressure on the stone strip, the contact time during which the contact pressure is applied, the spreading of the glue, the number of glue lines, the glue's viscosity, the glue temperature and/or the quantity of glue.

The contact pressure is applied on the stone strip for a specific contact time. A short contact time results in the stone strips being glued in rapid succession. Preferably, in this first embodiment, the contact time is selected shorter than 0.2 seconds, in particular between 0.01 and 0.2 seconds, and, preferably, between 0.1 and 0.2 seconds. In this way, as many stone strips as possible can be applied and pressed per unit of time.

The time that elapses between the glue being applied and the stone strip being pressed is the delay time during which the glue is exposed and/or dries slightly and hardens.

The contact pressure applied in this first embodiment depends on said delay time. For example, for the strip with a sawing plane of 200 mm by 50 mm, the contact pressure is at least 50N, with a delay time of 0 minutes, and it will rise linearly with an increasing delay to 150N, with a delay time of 45 minutes. In this way, an optimal contact pressure is obtained, which, within the short contact time, results in a sufficient spread of the glue for good adhesion of the stone strips to the substrate. Thus, the greatest delay time is preferably taken into account to determine the optimal contact force, which may be kept constant.

Furthermore, the contact pressure may also depend on the size of the stone strip. Thus, the contact pressure is preferably proportional to the surface area of the plane of the stone strip facing the substrate and which can therefore be provided with the glue between the stone strip and the substrate. Thus, for example, the contact pressure for half sawn brick strips will be halved, since the surface area of the sawing plane is only half. For example, for a brick strip of 200 mm by 50 mm by 20 mm that has been halved, the surface of the sawing plane is, for example, 100 mm by 50 mm, more specifically 50 cm$^2$.

The contact pressure per surface measure applied in this first embodiment is, for example, at least 5 kN/m$^2$ with a delay time of 0 minutes, and it will rise linearly with increasing delay to 15 kN/m$^2$ with a delay time of 45 minutes.

In this first embodiment, a two-component epoxy glue is used, which is known as such by those skilled in the art. Preferably, the components of the adhesive have a density between 1.2 g/cm$^3$ and 1.7 g/cm$^3$ at an ambient temperature of 20°C. When applying the glue, the glue temperature should preferably be 10°C to 40°C. The temperature can be considered as a constant in this embodiment. The quantity of glue applied to the surface of the substrate is, preferably, 600 g/m$^2$ to 1000 g/m$^2$.

This first embodiment of the method is not limited to the described substrate, stone strip and/or glue. For example, the substrate may also consist of other insulation boards, laminated wood, concrete, fibre cement board, combinations thereof or other panels that can be used for building or cladding facades. For example, the glue may be a one-component or a two-component glue. For example, the glue may also be polyurethane glue. For example, the stone strips may consist of concrete, composite stone or natural stone. For example, the stone strips may be stone strips formed in moulds instead of strips sawn from bricks.

According to a variant of the first embodiment of the method, the delay time and the associated contact pressure for the stone strip are determined for each stone strip. When the delay time varies according to this variant, the contact pressure is also adjusted. As a result, an optimal contact pressure is applied for each stone strip. In this way, it is possible to obtain a sufficient spread of the glue within the selected short contact time for a good adhesion of the stone strip.

When the stone strip is applied to different parts of glue with different delay times, only the longest delay time will preferably be taken into account. Alternatively, different contact pressures may be distributed over the surface of the stone strip.

According to a further variant of the first embodiment of the method, discrete glue droplets are spread over the substrate instead of glue lines.

According to an interesting variant of the first embodiment, the quality of gluing and thus the adhesion of the brick strips to the substrate is determined on the basis of the delay time and/or the contact pressure. Preferably, the glue temperature and/or the contact time are also taken into account. Sensors for measuring the delay time, the contact pressure, the contact time and/or the glue temperature can be provided for this purpose. For the later evaluation of the stone strip panel, the quality, delay time and/or contact pressure are saved together with coordinates of the stone strips.

To this end, values of the glue temperature and/or the contact time can also be saved together with coordinates of the stone strips. In order to assess the quality of adhesion of the stone strips, for example, predetermined values can be compared with the measured values. If, for example, a value is measured that deviates too much from the predetermined value, an alarm can be generated as a warning that the quality requirements were not met. For example, an alarm can be generated when the delay time is too long. If the delay time is too long, the adhesion of the brick strips may no longer be sufficient because the glue has dried out too much. The maximum acceptable delay time can easily be determined experimentally depending on the specific circumstances, glue, substrate and stone strip.

According to another interesting variant of the first embodiment, the stone strip is moved parallel to the substrate while being pressed. As a result, the glue will be better distributed over the substrate and the stone strip, so that the contact surface of the glue increases.

According to yet another interesting variant of the first embodiment, the glue lines are applied parallel to each other on the substrate at a distance between two successive glue lines which corresponds to the width of the stone strips increased by the width of the joint to be provided between two stone strips. When applying the stone strip, it is then placed lengthwise - in the longitudinal direction - with the sawing plane on the glue line, and is subsequently pressed. Alternatively, the distance between two successive glue lines can be selected to be smaller, so that the stone strip is placed on several glue lines. Furthermore, at least a part of the stone strips can also, for instance, be placed crosswise or diagonally to the glue lines.

According to this first embodiment of the method, the stone strip can also be moved obliquely to the substrate while the stone strip is being pressed. Furthermore, it is also possible to move said stone strip back and forth, parallel to the substrate, after and/or during the pressing of the stone strip. This results in a better spreading of the glue. Pressing the stone strip may possibly be done in three stages, for example, wherein in a first stage, the stone strip is moved perpendicular to the substrate; next, in a second stage, it is moved parallel to the substrate, and finally, in a third stage, it is moved further towards the substrate.

The movement parallel to the substrate is preferably performed over a distance that is no more than 50% of the width of the stone strip, in particular no more than 10%, or no more than 5%.

A second embodiment differs from the first embodiments in that the glue is applied to the stone strip, after which this stone strip is pressed against the substrate with the glue between the stone strip and the substrate. The glue can, for example, be applied to the stone strip in streaks, dots or discrete droplets. Glue lines can also be applied longitudinally, diagonally and/or transversely to the longitudinal direction of the stone strip.

A third embodiment differs from the first and second embodiments in that glue is applied to both the stone strip and the substrate, after which the stone strip is pressed against the substrate with the glue between the stone strip and the substrate.

A fourth embodiment differs from the first, second and third embodiments in that the contact pressure is determined as a function of the delay time and also the glue temperature.

In this fourth embodiment of the method, the temperature of the glue applied to the substrate and/or the stone strip can be measured by means of, for example, an infrared temperature sensor and/or a thermocouple. The glue temperature may possibly also be kept constant.

The stone strips in a method according to this fourth embodiment have, for example, an adhesive surface that has to be turned towards the substrate, with dimensions of 200 mm by 50 mm. The adhesive surface is therefore a surface of the stone strip which must be turned towards the substrate and which can make contact with the glue between the stone strip and the substrate.

According to this method, the contact pressure should not exceed, for example, 125 N to 200 N. Preferably, the contact pressure should not exceed 150 N.

Further, the contact pressure according tot his fourth embodiment of the method has a minimum value determined by the equation

$$F_{min} \, [N] = (A \times t_{open} \, [min] \times T_{glue} \, [°C]) + C$$

where

$F_{min}$ is the minimum contact force in Newton (N),
A is a constant which in this specific method is, for example, 0.056,
$t_{open}$ is the delay time in minutes (min),
$T_{glue}$ is the glue temperature in °C, and
C is a constant in Newton (N) which in this method is, for example, 30 N to 70 N, preferably, specifically 50 N.

The constant A in this embodiment can be determined experimentally and depends on the selected contact time, glue, stone strip and/or substrate. For example, in addition to the dimensions of the adhesive surface of the stone strips, the porosity of the stone strips and the substrate can also influence the adhesion of the glue and thus the necessary contact pressure. This is also influenced by the weight, size and shape of the stone strip.

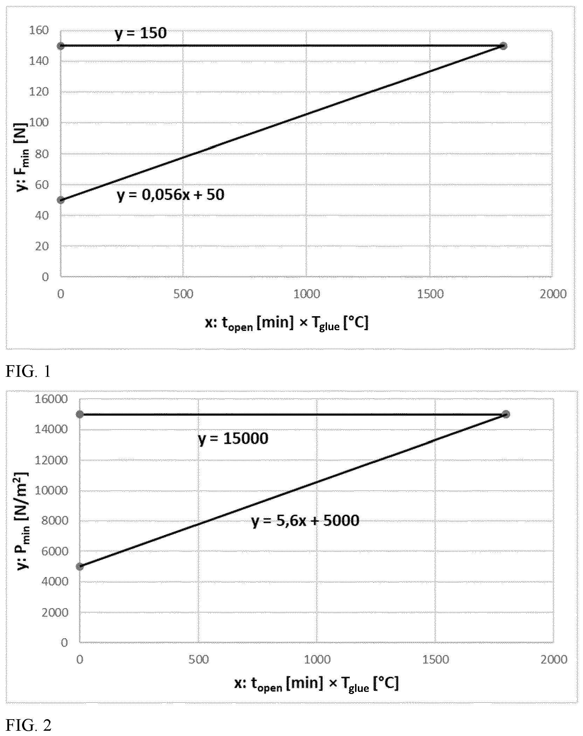

Figure 1 graphically depicts, for a specific method according to the fourth embodiment, the contact pressure as a function of the delay time and the glue temperature, in which A specifically is 0.056 and C is 50 N. The stone strips are porous brick strips in this case with dimensions of approximately 200 mm by 50 mm by 20 mm. Thus, the plane of the stone strip to be glued has a surface that is approximately 100 cm$^2$. The substrate consists of a concrete panel.

According to this specific method, the contact pressure should have a value in the range above the straight line y = 0.056 x + 50 and below the straight line y = 150. Preferably, the contact pressure in this range is further selected below the line y = 0.056 x + 50 + 5.

According to a variant of this fourth embodiment, the constant C depends on the viscosity of the glue and is determined by the equation

$$C = 5.10^{-5} \times \eta$$

where

$\eta$ is the glue's viscosity in mPa.s.

According to a further variant of the fourth embodiment of the method, the contact force is selected smaller than $F_{min}$ + 50 N, preferably smaller than $F_{min}$ + 10 N, in particular smaller than $F_{min}$ + 5 N.

Furthermore, the contact pressure depends on the surface of the stone strips. The contact pressure on smaller stone strips with a smaller adhesive surface should be less. For larger stone strips, it should be more. Thus, the contact pressure per surface measure according to this fourth embodiment has a maximum which is, for example, 12.5 kN/m$^2$ to 20 kN/m$^2$ . This maximum is preferably 15 kN/m$^2$. Thus, the contact pressure per surface measure according to this fourth embodiment has a minimum which is determined by the equation

$$P_{min} \, [N/m^2] = (A' \times t_{open} \, [min] \times T_{glue} \, [°C]) + C'$$

where

$P_{min}$ is the minimum contact pressure per surface measure in Newtons per square metre (N/m$^2$),
A' is a constant which in this specific method is, for example, 5.6,
$t_{open}$ is the delay time in minutes (min),
$T_{glue}$ is the glue temperature in °C, and
C' is a constant in Newtons per square metre (N/m$^2$) which in this method is, for example, 3 kN/m$^2$ to 7 kN/m$^2$, by preference specifically 5 kN/m$^2$.

Figure 2 graphically shows, for a specific method according to the fourth embodiment, the contact pressure per surface measure as a function of the delay time and the glue temperature, in which A' specifically is 5.6 and C' is 5000 N/m$^2$.

According to an interesting variant of one of the previous embodiments, the quality of gluing of the stone strips is checked by measuring at least one parameter that influences this quality.

For example, at least one sensor is provided to measure at least one parameter on the basis of which the quality of adhesion of the stone strip is determined. Furthermore, the coordinates of the stone strip on the substrate are determined in relation to a reference point on this substrate.

The measured parameter can be, for example, the delay time, the contact pressure, the glue temperature and/or the contact time.

If this parameter is within an acceptable interval, a good quality of adhesion of the stone strip may be guaranteed. For example, in case of a deviating value, an alarm signal may be generated by a computer system. Similarly, a quality score may be assigned by a computer system, wherein this quality score is higher as the value of the measured parameter is closer to a reference value. Thus, as the value deviates from the reference value, this quality score may be lower.

According to this interesting variant, the quality score for the stone strip and/or the measured parameter is stored by the computer system together with the coordinates of the stone strip with respect to the substrate. Preferably, the coordinates are determined with respect to at least one reference point on the substrate.

The quality score of the stone strip and/or the measured parameter may then be visually displayed, for example, on a screen using, for example, a colour code from which the quality of adhesion of the stone strip can be derived. Thus, a two-dimensional image could be displayed with a green colour for the stone strips that meet the quality requirements with a sufficiently high quality score, and red for the stone strips that do not comply, with a quality score that is too low.

According to a further interesting variant of this embodiment, an identification is applied to the substrate, so that the stored data regarding the above-mentioned quality scores of the stone strips and/or the measured parameters can be retrieved. The identification may consist of, for example, a barcode, magnetic strip and/or RFID tag, which are known as such to a person skilled in the art.

According to the above embodiments, the contact time may be kept constant for each stone strip. Alternatively, in a third embodiment of the invention, the contact time may be varied as a function of the delay time, the contact pressure and/or the glue temperature. Thus, for example, a higher contact pressure will require a shorter contact time. Similarly, a higher glue temperature will require a shorter contact time. Conversely, a longer contact time will be required at a lower glue temperature, lower contact pressure and/or longer delay time.

According to the invention, a device for gluing stone strips to a substrate is provided with a glue unit and a supply unit. The device is intended to apply the stone strips to the substrate according to a specific bonding pattern. To this end, the glue unit and the supply unit are controlled by a control unit.

The control unit may comprise a computer system with a computer programmed to control the glue unit and the supply unit and to realize the inputted bonding pattern.

Controlled by the control unit, the glue unit applies the glue to the substrate and/or the stone strip. To this end, it is provided with, for example, a robot arm with a glue head and a mixer for mixing the two components of the glue when two-component glue is used.

The supply unit applies the stone strips to the substrate with the glue between the substrate and the stone strip. The supply unit may consist of a robot arm with a gripper for the stone strips for moving them from a stock to the substrate. The supply unit is also controlled by the control unit that determines where, according to the bonding pattern, the stone strips are to be placed on the substrate. The supply unit may also be equipped with one or more sensors and/or cameras to determine the properties of the stone strips. These properties may consist of colour, texture and/or specific dimensions of the stone strip. Depending on this, the control unit may determine at which location the stone strip should be placed in the pattern on the substrate.

The control unit further determines, as a function of the delay time between the glue being applied and the stone strips being applied, the contact pressure with which these stone strips must be pressed against the substrate. This is preferably done for each stone strip. Alternatively, an average or minimum contact pressure may be determined, which is applied to several or all stone strips.

The control unit may determine in advance the optimal bonding pattern together with the delay times for each stone strip. Based on this, the latter can then determine the contact pressure for the stone strips and control a pressing unit. Possibly, the glue temperature can thereby be kept constant. The glue temperature may also be continuously measured and monitored to determine the contact pressures. In addition, the delay time may also be continuously measured and monitored. Thus, the contact pressures may be determined dynamically while gluing, as a function of the measured delay time and/or glue temperature.

Depending on the pressure force determined by the control unit, the pressing unit will press the stone strips against the substrate with the determined contact pressure in order to obtain a good spread of the glue and to obtain sufficient adhesion of the stone strip to the substrate.

The pressing unit may consist of, for example, a hydraulic piston or a piston driven by, for example, compressed air or an electric motor. The pressing unit may possibly be integrated in the supply unit.

According to the invention, the device is preferably also provided with a registration unit and at least one sensor for measuring at least one parameter which determines the quality of gluing of the stone strip.

These parameters may be, for example, the delay time, the contact pressure, the glue temperature and/or the contact time. The registration unit is hereby set to store the value of this parameter and/or the quality together with the coordinates of the stone strip on the substrate.

The respective sensors are known as such to the person skilled in the art and may include, for example, an infrared sensor, a thermocouple, a pressure sensor, a CMOS sensor, a CCD camera, a laser sensor and/or a laser scanner.

Experimental results

By means of test set-ups, the various parameters can be tested and the quality of adhesion of the stone strip can be evaluated. For example, the spread of the glue between the stone strip and the substrate is a measure of the quality of adhesion of the stone strip. A larger spread indicates a better adhesion. For example, for the spread of the glue as a quality requirement, a minimum surface can be imposed for the contact area of the glue between the stone strip and the substrate which amounts to 50%, 70% or 75% of the surface of the stone strip facing the substrate. The necessary parameters for this can easily be determined experimentally, depending for example on the glue, the glue temperature, the glue viscosity, the substrate and the stone strip. Thus, for a specific substrate and stone strip, the optimal contact pressure can be determined as a function of the delay time and possibly the glue temperature. The contact time can be kept constant in this case.

Glue lines are applied to a fibre cement substrate. The distance between two successive glue lines is 23 mm in this case. The stone strips are provided crosswise to these glue lines. The stone strips are porous sawn bricks in this case and have dimensions of approximately 200 mm by 50 mm by 20 mm. The sawing plane, which is also the adhesive surface, has a surface of approximately 200 mm by 50 mm that amounts to approximately 100 cm$^2$.

The glue being used is a two-component epoxy glue. A first component has a density of 1.54 g/cm$^3$ and a viscosity of 3150000 mPa.s. A second component has a density of 1.34 g/cm$^3$ and a viscosity of 2600000 mPa.s. Approximately 10 g of glue is provided per stone strip. The glue temperature is 25°C. The contact time is 0.2 seconds.

In a first experiment, the impact of the delay time on the formation of the glue's contact area is investigated. The results are shown in table 1. For the specific stone strips, with the parameters used, the delay time should be less than 30 minutes in order to obtain a glue cover of more than 70% of the stone strip's surface facing the substrate.

Table 1. Surface of the contact area of the glue as a function of the delay time at a contact pressure of 150 N, a glue temperature of 25°C and a contact time of 0.2 seconds.

| Delay time | 8 min | 30 min | 60 min |
|---|---|---|---|
| Surface of the stone strip's plane facing the substrate | 9605 mm$^2$ | 9885 mm$^2$ | 9820 mm$^2$ |
| Surface of the glue's contact area after pressing | 7620 mm$^2$ | 7299 mm$^2$ | 6499 mm$^2$ |
| Percentage of the stone strip's plane facing the substrate and making contact with the glue's contact area | **79.33%** | **73.84%** | **66.18%** |

In a second experiment, the impact of the contact pressure on the formation of the glue's contact area is examined. The results are shown in table 2. For the specific stone strips, with the parameters used, the contact pressure should be greater than 50 N in order to obtain a glue cover of more than 70% of the stone strip's surface facing the substrate.

Table 2. Surface of the contact area of the glue as a function of the contact pressure with a delay time of 15 minutes, a glue temperature of 25°C and a contact time of 0.2 seconds.

| Contact pressure | 50 N | 100 N | 140 N |
|---|---|---|---|
| Surface of the stone strip's plane facing the substrate | 10030 mm$^2$ | 10190 mm$^2$ | 10053 mm$^2$ |
| Surface of the glue's contact area after pressing | 7125 mm$^2$ | 7920 mm$^2$ | 8121 mm$^2$ |
| Percentage of the stone strip's plane facing the substrate and making contact with the glue's contact area | **71.04%** | **77.72%** | **80.78%** |

The invention is by no means limited to the methods and devices described above.

Thus, different elements from the embodiments and methods described above can be combined.

For instance, the quality of gluing of the stone strips, as described above, can possibly also be checked without determining the contact pressure as a function of the delay time between the glue being applied and the brick strip being pressed.

**Claims**

1. Method for machine gluing stone strips to a substrate,

> wherein glue is applied to the substrate and/or the stone strips,
> wherein subsequently, after a delay time, the stone strips are each pressed against the substrate with the glue between the stone strips and the substrate, during a contact time and with a contact pressure,
> **characterised in that** the contact pressure is determined as a function of the delay time between the glue being applied and the stone strip being pressed.

2. Method according to claim 1, wherein the glue has a temperature and the contact pressure is determined as a function of the delay time and the glue temperature.

3. Method according to any one of claims 1 or 2, wherein the contact pressure with which the stone strip is pressed, is determined for each stone strip.

4. Method according to any one of claims 1 to 3, wherein the stone strips are applied at a location in a predetermined pattern depending on predetermined characteristics of said stone strips, wherein, preferably, the predetermined characteristics of the stone strips comprise thickness, width, length, colour and/or texture.

5. Method according to any one of claims 1 to 4, wherein the contact time amounts 1 second to 0.01 seconds, preferably 0.2 seconds to 0.01 seconds, in particular 0.1 seconds to 0.01 seconds.

6. Method according to any one of claims 2 to 5, wherein the contact pressure per surface measure has a maximum that is 12500 N/m$^2$ to 20000 N/m$^2$, preferably 13500 N/m$^2$ to 17500 N/m$^2$, and in particular 15000 N/m$^2$, and

   wherein the contact pressure per surface measure has a minimum determined by the equation

   $$P_{min} \ [N/m^2] = (A' \times t_{open} \ [min] \times T_{glue} \ [°C]) + C'$$

   where
   $P_{min}$ is the minimum contact pressure in Newton per square metre (N/m$^2$),
   A' is a constant,
   $t_{open}$ is the delay time in minutes (min),
   $T_{glue}$ is the glue temperature in °C,
   C' is a constant in Newton per square metre (N/m$^2$).

7. Method according to claim 6, in which the constant A' is 1 to 10, preferably 3 to 7, in particular 5.6.

8. Method according to claim 6 or 7, wherein the constant C' is 500 N/m$^2$ to 7500 N/m$^2$, preferably 3000 N/m$^2$ to 7000 N/m$^2$, and in particular 5000 N/m$^2$, or in which the constant C' depends on the glue's viscosity and is preferably determined by the equation

   $$C' = 5.10^{-3} \times \eta$$

   where
   $\eta$ is the glue's viscosity in mPa.s.

9. Method according to any one of claims 6 to 8, wherein the contact pressure per surface measure is selected smaller than $P_{min}$ + 5000 N/m$^2$, preferably smaller than $P_{min}$ + 1000 N/m$^2$, in particular smaller than $P_{min}$ + 500 N/m$^2$.

10. Method according to any one of claims 1 to 9, wherein the delay time is maximally 30 minutes, preferably maximally 45 minutes, in particular maximally 60 minutes.

11. Method according to any one of claims 1 to 10, wherein coordinates for the stone strip are determined on the substrate and the value of at least one parameter is measured which determines the quality of gluing of the stone strip,

    wherein, for this stone strip, the value of said parameter and/or the quality is stored together with the coordinates of the stone strip, where the parameter is preferably the delay time, the contact pressure, the glue temperature and/or the contact time,
    wherein the coordinates are preferably determined with respect to at least one reference point on the substrate, and wherein, further, the value of said parameter is preferably compared with at least one reference value and an alarm signal is generated when the value deviates from the reference value.

**12.** Device for gluing stone strips to a substrate and for manufacturing a panel with a stone strip finish, provided with

- a glue unit for applying glue to the substrate and/or the stone strips,
- a supply unit to provide the stone strips on the substrate with the glue between the stone strips and the substrate,
- a pressing unit for pressing the stone strips with a contact pressure against the substrate with the glue between the stone strips and the substrate,
- a control unit which is programmed to control the glue unit, the supply unit and the pressing unit and to glue the stone strips according to a laying pattern to the substrate,

**characterised in that** the control unit is further programmed to determine the contact pressure for each stone strip as a function of the delay time between the glue being applied and the stone strip being pressed.

**13.** Device according to claim 12, whereby a temperature sensor is provided to measure the glue temperature on the substrate and/or on the stone strip and whereby the control unit is programmed to determine the contact pressure as a function of the delay time and the glue temperature.

**14.** Device according to claim 12 or 13, whereby at least one sensor is provided for measuring at least one parameter which determines the quality of gluing of the stone strip, and

whereby a registration unit is provided which is set to store for each stone strip the value of said parameter and/or the quality together with the coordinates of the stone strip in relation to the substrate,
whereby, preferably, the at least one parameter comprises the glue temperature, the delay time, the contact pressure and/or the contact time.

**15.** Device according to claim 12 or 13, whereby at least one sensor is provided to measure at least one parameter which determines the quality of gluing of the stone strip, and

whereby a registration unit is provided which is set to compare said parameter for each stone strip with at least one reference value in order to determine the quality of gluing and to store this quality together with the coordinates of the stone strip in relation to the substrate,
whereby, preferably, the at least one parameter comprises the glue temperature, the delay time, the contact pressure and/or the contact time.

**Patentansprüche**

**1.** Verfahren zum maschinellen Kleben von Steinstreifen auf ein Substrat,

wobei Kleber auf das Substrat und/oder die Steinstreifen aufgetragen wird,
wobei anschließend, nach einer Verzögerungszeit, die Steinstreifen während einer Kontaktzeit mit einem Kontaktdruck jeweils gegen das Substrat mit dem Kleber zwischen den Steinstreifen und dem Substrat gedrückt werden,
**dadurch gekennzeichnet, dass** der Kontaktdruck in Abhängigkeit von der Verzögerungszeit zwischen dem Auftragen des Klebers und dem Aufdrücken des Steinstreifens bestimmt wird.

**2.** Verfahren nach Anspruch 1, wobei der Kleber eine Temperatur aufweist und der Kontaktdruck in Abhängigkeit von der Verzögerungszeit und der Klebertemperatur bestimmt wird.

**3.** Verfahren nach einem der Ansprüche 1 oder 2, wobei der Kontaktdruck, mit dem der Steinstreifen aufgedrückt wird, für jeden Steinstreifen bestimmt wird.

**4.** Verfahren nach einem der Ansprüche 1 bis 3, wobei die Steinstreifen an einer Stelle in einem vorbestimmten Muster abhängig von vorbestimmten Eigenschaften der Steinstreifen aufgebracht werden, wobei die vorbestimmten Eigenschaften der Steinstreifen vorzugsweise Dicke, Breite, Länge, Farbe und/oder Textur umfassen.

**5.** Verfahren nach einem der Ansprüche 1 bis 4, wobei die Kontaktzeit 1 Sekunde bis 0,01 Sekunden, vorzugsweise 0,2 Sekunden bis 0,01 Sekunden, insbesondere 0,1 Sekunden bis 0,01 Sekunden beträgt.

6. Verfahren nach einem der Ansprüche 2 bis 5, wobei der Kontaktdruck pro Flächenmaß ein Maximum aufweist, das 12500 N/m² bis 20000 N/m², vorzugsweise 13500 N/m² bis 17500 N/m² und insbesondere 15000 N/m² beträgt, und

   wobei der Kontaktdruck pro Flächenmaß ein Minimum aufweist, das durch die folgende Gleichung bestimmt wird:

$$P_{min}[N/m^2] = (A' \text{ x } t_{offen} \text{ [min] x } T_{Kleber} [°C]) + C',$$

   wobei
   $P_{min}$ der minimale Kontaktdruck in Newton pro Quadratmeter (N/m²) ist,
   A' eine Konstante ist,
   $t_{offen}$ die Verzögerungszeit in Minuten (min) ist,
   $T_{Kleber}$ die Klebertemperatur in °C ist,
   C' eine Konstante in Newton pro Quadratmeter (N/m²) ist.

7. Verfahren nach Anspruch 6, wobei die Konstante A' 1 bis 10, vorzugsweise 3 bis 7, insbesondere 5,6 beträgt.

8. Verfahren nach Anspruch 6 oder 7, wobei die Konstante C' 500 N/m² bis 7500 N/m², vorzugsweise 3000 N/m² bis 7000 N/m² und insbesondere 5000 N/m² beträgt oder wobei die Konstante C' von der Viskosität des Klebers abhängig ist und vorzugsweise durch die folgende Gleichung bestimmt wird:

$$C' = 5,10^{-3} \text{ x } \eta$$

   wobei
   $\eta$ die Viskosität des Klebers in mPa.s ist.

9. Verfahren nach einem der Ansprüche 6 bis 8, wobei der Kontaktdruck pro Flächenmaß kleiner als $P_{min}$ + 5000 N/m², vorzugsweise kleiner als $P_{min}$ + 1000 N/m², insbesondere kleiner als $P_{min}$ + 500 N/m² ausgewählt ist.

10. Verfahren nach einem der Ansprüche 1 bis 9, wobei die Verzögerungszeit maximal 30 Minuten, vorzugsweise maximal 45 Minuten, insbesondere maximal 60 Minuten beträgt.

11. Verfahren nach einem der Ansprüche 1 bis 10, wobei Koordinaten für den Steinstreifen auf dem Substrat bestimmt werden und der Wert von mindestens einem Parameter gemessen wird, der die Qualität des Klebens des Steinstreifens bestimmt,

    wobei für diesen Steinstreifen der Wert des Parameters und/oder die Qualität zusammen mit den Koordinaten des Steinstreifens gespeichert werden, wobei der Parameter vorzugweise die Verzögerungszeit, der Kontaktdruck, die Klebertemperatur und/oder die Kontaktzeit ist,
    wobei die Koordinaten vorzugsweise in Bezug auf mindestens einen Referenzpunkt auf dem Substrat bestimmt werden
    und wobei ferner der Wert des Parameters vorzugsweise mit mindestens einem Referenzwert verglichen wird und ein Alarmsignal erzeugt wird, wenn der Wert von dem Referenzwert abweicht.

12. Vorrichtung zum Kleben von Steinstreifen auf ein Substrat und zum Herstellen einer Platte mit einer Steinstreifenoberfläche, versehen mit

    - einer Klebeeinheit zum Auftragen von Kleber auf das Substrat und/oder die Steinstreifen,
    - einer Zufuhreinheit, um die Steinstreifen auf dem Substrat mit dem Kleber zwischen den Steinstreifen und dem Substrat zu versehen,
    - einer Presseinheit zum Drücken der Steinstreifen mit einem Kontaktdruck gegen das Substrat mit dem Kleber zwischen den Steinstreifen und dem Substrat,
    - einer Steuereinheit, die dazu programmiert ist, die Klebeeinheit, die Zufuhreinheit und die Presseinheit zu steuern und die Steinstreifen gemäß einem Legemuster auf das Substrat zu kleben,

    **dadurch gekennzeichnet, dass** die Steuereinheit ferner dazu programmiert ist, den Kontaktdruck für jeden Steinstreifen in Abhängigkeit von der Verzögerungszeit zwischen dem Auftragen des Klebers und dem Aufdrücken des Steinstreifens zu bestimmen.

13. Vorrichtung nach Anspruch 12, wobei ein Temperatursensor bereitgestellt ist, um die Klebertemperatur auf dem Substrat und/oder auf dem Steinstreifen zu messen, und wobei die Steuereinheit dazu programmiert ist, die Kontaktdruck in Abhängigkeit von der Verzögerungszeit und der Klebertemperatur zu bestimmen.

14. Vorrichtung nach Anspruch 12 oder 13, wobei mindestens ein Sensor zum Messen mindestens eines Parameters bereitgestellt ist, der die Qualität des Klebens des Steinstreifens bestimmt, und

> wobei eine Registrierungseinheit bereitgestellt ist, die eingestellt ist, um für jeden Steinstreifen den Wert des Parameters und/oder die Qualität zusammen mit den Koordinaten des Steinstreifens in Bezug auf das Substrat zu speichern,
> wobei der mindestens eine Parameter vorzugsweise die Klebertemperatur, die Verzögerungszeit, den Kontaktdruck und/oder die Kontaktzeit umfasst.

15. Vorrichtung nach Anspruch 12 oder 13, wobei mindestens ein Sensor bereitgestellt ist, um mindestens einen Parameter zu messen, der die Qualität des Klebens des Steinstreifens bestimmt, und

> wobei eine Registrierungseinheit bereitgestellt ist, die eingestellt ist, um den Parameter für jeden Steinstreifen mit mindestens einem Referenzwert zu vergleichen, um die Qualität des Klebens zu bestimmen und diese Qualität zusammen mit den Koordinaten des Steinstreifens in Bezug auf das Substrat zu speichern,
> wobei der mindestens eine Parameter vorzugsweise die Klebertemperatur, die Verzögerungszeit, den Kontaktdruck und/oder die Kontaktzeit umfasst.

**Revendications**

1. Procédé de collage à la machine de bandes de pierre sur un substrat,

> dans lequel de la colle est appliquée sur le substrat et/ou sur les bandes de pierre,
> et dans lequel, après un délai d'attente, les bandes de pierre sont ensuite pressées chacune contre le substrat avec la colle présente entre les bandes de pierre et le substrat, pendant un temps de contact et sous une pression de contact,
> **caractérisé en ce que** la pression de contact est déterminée en fonction du délai d'attente entre l'application de la colle et l'exercice d'une pression sur les bandes de pierre.

2. Procédé selon la revendication 1, dans lequel la colle présente une certaine température et la pression de contact est déterminée en fonction du délai d'attente et de la température de la colle.

3. Procédé selon l'une quelconque des revendications 1 ou 2, dans lequel la pression de contact avec laquelle la bande de pierre est pressée est déterminée pour chaque bande de pierre.

4. Procédé selon l'une quelconque des revendications 1 à 3, dans lequel les bandes de pierre sont appliquées en un certain endroit suivant un schéma prédéterminé en fonction de caractéristiques prédéterminées desdites bandes de pierre, et dans lequel, de préférence, les caractéristiques prédéterminées des bandes de pierre comprennent l'épaisseur, la largeur, la longueur, la couleur et/ou la texture.

5. Procédé selon l'une quelconque des revendications 1 à 4, dans lequel le temps de contact est compris entre 1 seconde et 0,01 seconde, de préférence entre 0,2 seconde et 0,01 seconde, et en particulier entre 0,1 seconde et 0,01 seconde.

6. Procédé selon l'une quelconque des revendications 2 à 5, dans lequel la pression de contact par mesure de surface présente un maximum qui est compris entre 12500 N/m² et 20000 N/m², de préférence entre 13500 N/m² et 17500 N/m², et en particulier qui est égal à 15000 N/m², et

> dans lequel la pression de contact par mesure de surface présente un minimum qui est déterminé par l'équation suivante :

$$P_{min} \ [N/m^2] = (A' \times t_{open} \ [min] \times T_{glue} \ [°C]) + C'$$

dans laquelle
$P_{min}$ correspond à la pression de contact minimale en Newton par mètre carré ($N/m^2$),
A' est une constante,
$t_{open}$ désigne le délai d'attente en minutes (min),
$T_{glue}$ désigne la température de la colle en °C, et
C'est une constante en Newton par mètre carré ($N/m^2$).

7. Procédé selon la revendication 6, dans lequel la constante A' est comprise entre 1 et 10, de préférence entre 3 à 7, et en particulier est égale à 5,6.

8. Procédé selon la revendication 6 ou 7, dans lequel la constante C' est comprise entre 500 $N/m^2$ et 7500 $N/m^2$, de préférence entre 3000 $N/m^2$ et 7000 $N/m^2$, et en particulier est égale à 5000 $N/m^2$, ou dans lequel la constante C' dépend de la viscosité de la colle et est de préférence déterminée par l'équation suivante :

$$C' = 5.10^{-3} \times \eta$$

dans laquelle
$\eta$ représente la viscosité de la colle en mPa.s.

9. Procédé selon l'une quelconque des revendications 6 à 8, dans lequel la pression de contact par mesure de surface est sélectionnée de manière à être inférieure à $P_{min}$ + 5000 $N/m^2$, de préférence inférieure à $P_{min}$ + 1000 $N/m^2$, et en particulier inférieure à $P_{min}$ + 500 $N/m^2$.

10. Procédé selon l'une quelconque des revendications 1 à 9, dans lequel le délai d'attente est au maximum de 30 minutes, de préférence au maximum de 45 minutes, et en particulier au maximum de 60 minutes.

11. Procédé selon l'une quelconque des revendications 1 à 10, dans lequel des coordonnées pour la bande de pierre sont déterminées sur le substrat et la valeur d'au moins un paramètre qui détermine la qualité du collage de la bande de pierre est mesurée,

dans lequel, pour cette bande de pierre, la valeur dudit paramètre et/ou la qualité est/sont enregistrée(s) avec les coordonnées de la bande de pierre, et dans lequel le paramètre est de préférence le délai d'attente, la pression de contact, la température de la colle et/ou le temps de contact,
dans lequel les coordonnées sont de préférence déterminées par rapport à au moins un point de référence sur le substrat,
et dans lequel, en outre, la valeur dudit paramètre est de préférence comparée à au moins une valeur de référence et un signal d'alarme est généré lorsque la valeur s'écarte de la valeur de référence.

12. Dispositif de collage de bandes de pierre sur un substrat et de fabrication d'un panneau présentant une finition de type bandes de pierre, comprenant :

- une unité d'encollage pour appliquer de la colle sur le substrat et/ou sur les bandes de pierre,
- une unité d'alimentation pour amener les bandes de pierre sur le substrat avec la colle présente entre les bandes de pierre et le substrat,
- une unité de pressage pour presser les bandes de pierre avec une pression de contact contre le substrat avec la colle présente entre les bandes de pierre et le substrat,
- une unité de commande programmée de manière à commander l'unité d'encollage, l'unité d'alimentation ainsi que l'unité de pressage et pour coller les bandes de pierre sur le substrat suivant un schéma de pose,

**caractérisé en ce que** l'unité de commande est en outre programmée de manière à déterminer la pression de contact pour chaque bande de pierre en fonction du délai d'attente entre l'application de la colle et l'exercice d'une pression sur les bandes de pierre.

13. Dispositif selon la revendication 12, dans lequel un capteur de température est prévu pour mesurer la température de la colle sur le substrat et/ou sur la bande de pierre et dans lequel l'unité de commande est programmée de manière à déterminer la pression de contact en fonction du délai d'attente et de la température de la colle.

14. Dispositif selon la revendication 12 ou 13, dans lequel au moins un capteur est prévu pour mesurer au moins un paramètre qui détermine la qualité du collage de la bande de pierre, et

une unité d'enregistrement est prévue pour mémoriser pour chaque bande de pierre la valeur de ce paramètre et/ou la qualité ainsi que les coordonnées de la bande de pierre par rapport au substrat, et
ledit au moins un paramètre comprend de préférence la température de la colle, le délai d'attente, la pression de contact et/ou le temps de contact.

15. Dispositif selon la revendication 12 ou 13, dans lequel au moins un capteur est prévu pour mesurer au moins un paramètre qui détermine la qualité du collage de la bande de pierre, et

une unité d'enregistrement est prévue pour comparer ce paramètre pour chaque bande de pierre avec au moins une valeur de référence dans le but de déterminer la qualité du collage et de mémoriser cette qualité ainsi que les coordonnées de la bande de pierre par rapport au substrat, et
ledit au moins un paramètre comprend de préférence la température de la colle, le délai d'attente, la pression de contact et/ou le temps de contact.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2516054 A

- JP 2000328711 A